(19) Europäisches Patentamt
European Patent Office
Office européen des brevets

(11) **EP 3 601 439 B1**

(12) **EUROPÄISCHE PATENTSCHRIFT**

(45) Veröffentlichungstag und Bekanntmachung des Hinweises auf die Patenterteilung:
**03.03.2021 Patentblatt 2021/09**

(21) Anmeldenummer: **18712200.7**

(22) Anmeldetag: **19.03.2018**

(51) Int Cl.:
*C09C 1/24* (2006.01)          *C01G 49/00* (2006.01)
*C01G 49/06* (2006.01)          *C09D 1/00* (2006.01)
*C08K 3/18* (2006.01)          *C08K 3/013* (2018.01)
*C08K 3/22* (2006.01)          *C08K 9/02* (2006.01)

(86) Internationale Anmeldenummer:
**PCT/EP2018/056863**

(87) Internationale Veröffentlichungsnummer:
**WO 2018/177789 (04.10.2018 Gazette 2018/40)**

(54) **AL-HALTIGE EISENOXIDPIGMENTE**

AL-CONTAINING IRON OXIDE PIGMENTS

PIGMENTS D'OXYDE DE FER CONTENANT DU AL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.03.2017 EP 17164231**
            **04.07.2017 EP 17179589**
            **05.02.2018 EP 18155087**

(43) Veröffentlichungstag der Anmeldung:
**05.02.2020 Patentblatt 2020/06**

(73) Patentinhaber: **LANXESS Deutschland GmbH**
**50569 Köln (DE)**

(72) Erfinder:
• **BÜTJE, Kai**
**47229 Duisburg (DE)**

• **KATHREIN, Christine**
**40474 Düsseldorf (DE)**
• **ROSENHAHN, Carsten**
**47906 Kempen (DE)**
• **KISCHKEWITZ, Jürgen**
**40883 Ratingen (DE)**
• **MEISEN, Ulrich**
**53925 Kall (DE)**
• **KÖHLER, Peter**
**47809 Krefeld (DE)**

(56) Entgegenhaltungen:
EP-A2- 0 187 331          EP-A2- 1 380 542
WO-A1-2016/038152          DE-A1-102004 024 013

EP 3 601 439 B1

**Beschreibung**

Die Erfindung betrifft neue Al-haltige Eisenoxidpigmente, ein Verfahren zu ihrer Herstellung und ihre Verwendung zum Einfärben von Pasten, Lacken, Kunststoffen, Papier und Baumaterialien.

**Stand der Technik**

Hochwertige Eisenoxidrot-Pigmente, die den Stand der Technik repräsentieren, sind üblicherweise phasenreine Hämatite mit $Fe_2O_3$-Gehalten von 96,5 Gew. % bis zu 99,5 Gew. %.

Im Falle der Eisenoxid Direktrot-Pigmente sind bis zu 2,5 Gew. % Wasser enthalten, das weitestgehend im Hämatit-Gitter gebunden ist, während die durch Kalzination zugänglichen Rotpigmente frei von Kristallwasser sind und somit höhere $Fe_2O_3$ - Gehalte aufweisen.

Zur Herstellung dieser Rotpigmente existieren zahlreiche Verfahren, die dem Stand der Technik entsprechen, wobei in den vergangenen Jahren durch verschiedene Maßnahmen Verbesserungen bei den Pigmenteigenschaften erreicht werden konnten.

Besondere industrielle Bedeutung haben die Copperas-, Fäll- und Penniman-Verfahren sowie die Kalzination von Eisenoxid-Vorstufen auf Basis von Goethit und Magnetit.

Wichtige Einsatzgebiete dieser Rotpigmente sind Farben und Lacke (lösemittelhaltig, wässrig bzw. Pulverlacke), Kunststoffe sowie Papier und Laminate mit Pigmentierungshöhen bis zu ca. 35 Gew.-%.

Für die Messung der Farbeigenschaften von Eisenoxid-Rot-Pigmenten gibt es seit langem bestehende Testmethoden, bei denen die Farbigkeit von mit Eisenoxid-Rot-Pigmenten eingefärbten Medien wie Kunststoff-Prüfkörpern oder Lacksystemen gemessen werden.

Als Standard-Parameter zur Messung der Farbigkeit von Eisenoxid-Rot-Pigmenten haben sich die Parameter des sogenannten CIELAB-Farbraums etabliert. Dabei ist jede wahrnehmbare Farbe in diesem dreidimensionalem Farbraum durch den Farbort mit den Koordinaten L* (Helligkeit), a* (Rot-Grün-Wert) und b* (Gelb-Blau-Wert) definiert. Je positiver ein a*-Wert ist, desto stärker ist die Farbe Rot ausgeprägt, und je positiver ein b*-Wert ist, desto stärker ist die Farbe Gelb ausgeprägt. Die Farbe Blau ist dagegen umso stärker ausgeprägt, je negativer der b*-Wert ist. Neben diesen Parametern wird auch oft die Farbsättigung $C_{ab}^*$ (auch Chroma, Chromatizität oder Buntheit) angegeben. Dieser Wert ergibt sich direkt aus den Werten a* und b* und stellt die Quadratwurzel der Summe der Quadrate von a* und b* dar. Die Werte a*, b*, L*, und $C_{ab}^*$ sind dimensionslose Werte, die üblicherweise als "CIELAB-Einheiten" bezeichnet werden.

Bei der Farbmessung von Eisenoxid-Rot-Pigmenten hat sich für Lacksysteme die Prüfung in einem langöligen Alkydharz (nach DIN EN ISO 11664-4:2011-07 und DIN EN ISO 787-25:2007) etabliert. Als mögliches Alkydharz wurde früher das Alkydal L 64 der Firma Bayer verwendet. Mittlerweile werden andere, ähnliche Alkydharze wie das WorléeKyd P 151 der Firma Worlee Chemie GmbH eingesetzt.

Die entsprechende Farbmessung im Kunststoff erfolgt beispielsweise in Polyethylen (High Density Polyethylene, HDPE) bei einer Pigmentierungshöhe von 1 Gew.%.

Weiterhin wird für die Einfärbung von Kunststoffen oft gefordert, dass sich die Farbeigenschaften bei der Einwirkung von Temperaturen, wie sie typischerweise bei der Verarbeitung benötigt werden, möglichst wenig ändern. Ein wichtiges Beurteilungskriterium ist dabei die Veränderung der Farbsättigung $C_{ab}^*$ gegenüber dem Ausgangswert.

Ein bereits lange im Markt etabliertes Rotpigment stellt das Copperas Red® R 1599D der Firma Huntsman dar. Insbesondere der b*-Wert dieses Produktes ist allerdings noch verbesserungswürdig. Gleiches gilt auch beispielsweise für andere im Stand der Technik beschriebene Hämatit-Rotpigmente wie die aus der WO2016/038152 (siehe Tabelle 1).

Tabelle 1: Farbwerte in WorléeKyd P 151 (Purton, Lichtart D65/10°)

| Rotpigmente gemäß Stand der Technik | a* | b* | Cab* | Al-Gehalte [%] |
|---|---|---|---|---|
| R1599 D (Huntsman) | 31,4 | 24,5 | 39,9 | - |
| Beispiel 1 WO 2016/038152 | 31,1 | 24,7 | 39,6 | - |
| Beispiel 3 DE 102004/024013A1 | 31,3 | 23,0 | 38,8 | 1,0 |
| Beispiel 1 DE2826941 A1 | 30,2 | 23,0 | 38,0 | 0,95 |
| Beispiel Fe:Al= 95:5 kalziniert bei opt. T=700°C aus EP1380542 | 28,1 | 22,9 | 36,3 | 1,7 |
| EP187331, Beispiel 7 analoge Herstellung | 27,7 | 19,9 | 34,1 | 1,3 |

Zur weiteren Verbesserung dieser Rotpigmente oder deren besserer Bereitstellung wurden bereits zahlreiche Versuche unternommen.

In der DE3500470 (EP187331) wurde beispielsweise unter Verwendung des Fällmittels MgO und einer speziellen Fällungsmethodik versucht, einen Al-dotierten Hämatit mit einem verbesserten Farbton bereitzustellen (siehe Beispiele 7 und 8). Zwar wird dort durch den Einsatz von MgO gegenüber NaOH im Al-freien Hämatit eine leichte Erhöhung des b*-Wertes (siehe Vergleichsbeispiel B vs A) festgestellt, jedoch wurden in der DE'470 selbst für die Al-dotierten Hämatite noch immer verbesserungswürdige absolute Farbwerte, insbesondere b*-Werte gefunden. Im Übrigen führt die Präsenz von Magnesium zur Bildung von Mg-Ferriten mit keiner guten Coloristik. Ein Vergleich von MgO und der in EP'331 beschriebenen Zugabevariante gegenüber der erfindungsgemäßen Vorgehensweise kann dem Vergleichsbeispiel III der vorliegenden Erfindung entnommen werden (Ergebnisse siehe Tabelle 1).

Auch in der EP 1380542A1 hat man versucht, einen Weg zu beschreiten, um verbesserte Rotpigmente bereitzustellen. So wird ausgehend von einer Eisennitrat/Aluminiumnitrat-Lösung unter Verwendung organischer Verbindungen ein Gel hergestellt, das nach der Kalzinierung ein Al-dotiertes Eisenoxid ergibt, welches bei seiner optimalen Glühtemperatur von 800 °C (siehe Fig. 4B) noch immer mit einem a*-Wert von nur 27,6 CIELAB Einheiten nicht sehr farbrein ist. Außerdem hat sich dieses Al-dotierte Pigment auch gegenüber dem reinen Hämatit, welcher bei seiner optimalen Glühtemperatur von 650 °C (siehe Fig. 4A) einen höheren a*-Wert von immerhin 29 CIELAB Einheiten hat, koloristisch nicht verbessert. Insofern führt auch der Weg in EP'542 nicht zu dem gewünschten Ziel. In einer Nachstellung des Pigments aus EP'542 mit einem Fe:Al-Verhältnis von 95:5, konnten bei der optimalen Glühtemperatur von 700 °C, die Werte in der Tabelle 1 erhalten werden (siehe Vergleichsversuch II, der vorliegenden Erfindung).

In der DE2826941 werden ebenfalls Al-haltige Rotpigmente beschrieben, die nach dem Nitrobenzolreduktionsverfahren erhalten werden, wobei jedoch ebenfalls Rotpigmente mit einer noch verbesserungsfähigen Koloristik erhalten werden (vergl. Tabelle 1 unten). Die Herstellung erfolgt durch Auffällen eines Al-Salzes auf eine Magnetitvorstufe.

Nach DE 102004/024013 A1 werden Al-haltige Eisenoxid-Rotpigmente durch Beschichtung von feinteiligen Goethit ($\alpha$-FeOOH)-Vorstufen mit Aluminiumverbindungen und nachfolgende Kalzination hergestellt. Die Nacharbeitung beispielsweise von Beispiel 3 dieser Schrift lieferte Al-haltige Eisenoxid-Rotpigmente, deren Farbeigenschaften aber noch verbesserungswürdig sind (Tab.1).

Aufgabenstellung

Aufgabe der vorliegenden Erfindung war es daher, Rotpigmente zur Verfügung zu stellen, die den Farbraum gegenüber dem Stand der Technik vorhandenen Eisenoxidrotpigmente erweitern. Vorzugsweise sollen sie auch eine höhere Farbsättigung $C_{ab}$* besitzen und insbesondere eine verbesserte Hitzestabilität, beispielsweise in Kunststoffen, aufweisen. Es wurde gefunden, dass spezielle Al-haltige Eisenoxidpigmente diese Aufgabe lösen.

**Beschreibung**

Die Erfindung betrifft daher Al-haltige Eisenoxidpigmente der Formel $Fe_{2-x}Al_xO_3$ mit x-Werten von 0,01 bis 0,25, dadurch gekennzeichnet, dass sie einen a*-Wert von 30,5 bis 32,5 CIELAB-Einheiten und einen b*-Wert von 25,5 bis 30,5 CIELAB-Einheiten, jeweils gemessen im Alkydharz nach DIN EN ISO 787-25:2007 als Purton besitzen.

Die Farbmessung der erfindungsgemäßen Al-haltigen Eisenoxide erfolgt dabei in einem langöligen Alkydharz nach DIN EN ISO 787-25:2007, vorzugsweise mit Lichtart D65/10°, beispielsweise in WorléeKyd P 151 der Firma Worlee Chemie GmbH.

Bevorzugt liegt das erfindungsgemäße Al-haltige Eisenoxid in einer Hämatitstruktur vor. Dabei befindet sich das Aluminium vorzugsweise auf den oktaedrischen Gitterplätzen und substituiert dadurch $Fe^{3+}$ Ionen.

Bevorzugte Al-haltige Eisenoxide weisen eine Farbsättigung $C_{ab}$* von 39,8 bis 44,6 CIELAB-Einheiten auf. Dabei stellt $C_{ab}$* die Quadratwurzel der Summe der Quadrate von a* und b*, gemessen in dem obigen Lacksystem, dar.

Die erfindungsgemäßen Pigmente besitzen vorzugsweise eine hohe Hitzestabilität gemessen in HDPE Polyethylen mit bei einer 1 %igen Pigmentierung, bestimmt gemäß DIN EN 12877 - 2 durch eine Veränderung ($\Delta C_{ab}$*) der Farbsättigung ($C_{ab}$)* von weniger als 3 CIELAB-Einheiten, vorzugsweise weniger als 1,5 CIELAB-Einheiten bei einer Temperaturerhöhung von 200 auf 320°C.

In einer bevorzugten Ausführungsform der erfindungsgemäßen Pigmente steht in der Formel der Al-Index x für eine Zahl von 0,01 bis 0,10, insbesondere von 0,025 bis 0,075.

Ebenfalls bevorzugt sind erfindungsgemäße Pigmente, in der in der Formel der Al-Index x für eine Zahl von 0,11 bis 0,25, insbesondere von 0,12 bis 0,15 steht.

Ebenfalls bevorzugt weisen die erfindungsgemäßen Pigmente einen Wassergehalt von weniger als 0,8 Gew.%, bevorzugt von weniger als 0,5 Gew.% auf.

In einer weiteren bevorzugten Ausführungsform weisen die erfindungsgemäßen Pigmente einen Chloridgehalt von kleiner als 0,1 Gew.-%, vorzugsweise kleiner als 0,01 Gew.%, bezogen auf das Pigment auf.

Auch die Menge an Mangan und Chrom ist bevorzugt sehr gering. Vorzugsweise beträgt die Summe an Mangan und Chrom kleiner als 500 ppm, besonders bevorzugt kleiner als 100 ppm, bezogen auf das Pigment.

Auch für Magnesium gilt, dass dessen Anteil bevorzugt sehr gering ist. Vorzugsweise beträgt die Menge an Magnesium kleiner als 500 ppm, besonders bevorzugt kleiner als 100 ppm, bezogen auf das Pigment.

Die erfindungsgemäßen Pigmente weisen vorzugsweise eine spezifische Oberfläche nach der BET-Methode von 6,5 bis 12,5 $m^2/g$ auf.

Die erfindungsgemäßen Pigmente können auch beschichtet sein. Dabei können sie eine oder mehrere Beschichtungen ausgewählt aus anorganischen und/oder organischen Verbindungen aufweisen.

Organische Beschichtungsmittel umfassen beispielsweise mehrwertige Alkohole, Polyethylen-, Polypropylenglykole, deren Veretherungsprodukte mit einwertigen Alkoholen und Veresterungsprodukte mit Carbonsäuren sowie Silikonöle.

Als anorganische Beschichtungsmittel kommen vorzugsweise farblose Oxide oder Hydroxide von Al, Si, Zr und Mg, insbesondere $Al_2O_3$ in Frage.

Sofern die erfindungsgemäßen Pigmente beschichtet sind, werden die Beschichtungsmittel vorzugsweise in einer Menge von 0,01 bis 3 Gew.-%, bezogen auf das Pigment, angewendet.

## Verfahren

Die Erfindung betrifft weiterhin ein Verfahren zur Herstellung der erfindungsgemäßen Pigmente, enthaltend wenigstens die Schritte a) Fällung, b) Oxidation und c) Kalzination, dadurch gekennzeichnet, dass man

a1) eine wässrige Lösung enthaltend Eisen-, Sulfat- und Aluminium-Ionen, wobei das molare Verhältnis von Eisen- zu Al-Ionen 199 : 1 bis 7 : 1 beträgt, mit einem Alkalimetallhydroxid, wie NaOH, LiOH oder KOH, insbesondere NaOH als alkalischer Verbindung umsetzt, wobei die wässrige Lösung, enthaltend Eisen-, Sulfat- und Aluminium-Ionen zu der vorgelegten alkalischen Verbindung, vorzugsweise in Form ihrer wässrigen Lösung, zudosiert wird oder

a2) eine wässrige Lösung enthaltend Eisen- und Sulfat-Ionen mit einem Alkalimetallhydroxid, wie NaOH, LiOH oder KOH, insbesondere NaOH als alkalischer Verbindung, und wenigstens einer Aluminiumverbindung, vorzugsweise Alkali-Aluminat, insbesondere Natrium-aluminat umsetzt, wobei das molare Verhältnis von Eisen der Lösung zu Aluminium der Aluminiumverbindung 199 : 1 bis 7 : 1 beträgt und wobei die alkalische Verbindung mit wenigstens einer Aluminiumverbindung, vorzugsweise einer Alkali-Aluminatlösung, insbesondere als wässrige Lösung vorgelegt wird und die wässrige Lösung enthaltend Eisen- und Sulfat-Ionen zudosiert wird,

b) die nach Schritt a) erhaltene wässrige Suspension in Gegenwart eines Oxidationsmittels oxidiert und

c) das nach b) erhaltenen Oxidationsprodukt bei einer Temperatur von 500 bis 1100 °C in oxidierender Atmosphäre kalziniert.

Das Fe:Al Verhältnis von 199:1 bis 7:1 entspricht dabei in der angestrebten Zusammensetzung $Fe_{2-x}Al_xO_3$ einem x-Wert von 0,01 bis 0,25.

## Fällung a1)

Die wässrige Lösung enthaltend Eisen-, Sulfat- und Aluminium-Ionen kann durch Mischen von entsprechenden Sulfat-haltigen Eisensalzlösungen mit Aluminium-Ionen enthaltenden Lösungen erhalten werden, die wiederum einzeln aus entsprechenden Eisenvorläufern bzw. Aluminiumverbindungen erhalten werden können.

Beispielsweise können Eisen(II)-sulfate für entsprechende Eisensulfatlösungen aus Stahlbeizereien bzw. aus der $TiO_2$-Produktion nach dem Sulfatverfahren oder durch Auflösen von metallischem Eisen, Eisencarbonaten, Eisenhydroxiden oder Eisenoxiden in Schwefelsäure erhalten werden.

Zur Herstellung der erfindungsgemäßen Pigmente ist es bevorzugt, sehr reine Eisenrohstoffe in Form von Eisen(II)-sulfat-Lösungen mit einem Eisengesamtgehalt von 80 bis 95 g/l und einem Gehalt von Mangan und Chrom in Summe von kleiner 250 mg/l einzusetzen.

Die verwendete Lösung enthält vorzugsweise auch einen Magnesiumgehalt von kleiner als 500, vorzugsweise kleiner als 100 ppm, bezogen auf die Lösung.

Bevorzugt ist eine wässrige Lösung, enthaltend Eisen-, Sulfat- und Aluminium-Ionen für die Fällung nach Schritt a), in der die Eisen-Ionen in Form einer Mischung von Eisen (II) und Eisen (III) Ionen vorliegen, vorzugsweise mit einem Anteil von Fe(III) von 5 bis 30 Mol%, insbesondere 10 bis 20 Mol% Fe(III), bezogen auf die Gesamteisenmenge in der Lösung.

Die Einstellung der entsprechend bevorzugten Fe(III)-Anteile im jeweiligen Eisen(II)/(III)-Sulfatgemisch kann entweder durch Zusatz entsprechender Mengen an Eisensalzen, vorzugsweise von Eisen(III)-sulfat oder durch partielle Oxidation der Eisensalz-, vorzugsweise Eisen(II)-sulfat-Lösung beispielsweise mit Luftsauerstoff, vorzugsweise bei Temperaturen von 80 °C oder darüber, insbesondere bei 80 bis 100 °C, oder mit $H_2O_2$ bei Temperaturen vorzugsweise von 20 bis 70°C erfolgen.

Als Al-Komponenten in der wässrigen Lösung, enthaltend Eisen-, Sulfat- und Aluminium-Ionen können Aluminiumsalze wie z. B. Chloride, Sulfate oder auch Nitrate Verwendung finden, wobei Al(III)- Sulfate besonders bevorzugt sind.

Die wässrige Lösung, enthaltend Eisen-, Sulfat- und Aluminium-Ionen für den Schritt a1) enthält vorzugweise ein molares Verhältnis von Eisen in Form von Fe(II) und/oder Fe (III) zu Al-Ionen von 79:1 bis 26:1, vorzugsweise von 17,2:1 bis 7:1, insbesondere von 15,7:1 bis 12,3:1. Ein Fe:Al Verhältnis von 79:1 bis 26:1, entspricht dabei in der angestrebten Zusammensetzung $Fe_{2-x}Al_xO_3$ einem x-Wert von 0,025 bis 0,075, ein Fe:Al Verhältnis von 17.2:1 bis 7:1 entspricht dabei einem x-Wert von 0,11 bis 0,25 und ein Fe:Al Verhältnis von 15,7:1 bis 12,3:1 entspricht dabei einem x-Wert von 0,12 bis 0,15.

Die erfindungsgemäß eingesetzte wässrige Lösung, enthaltend Eisen-, Sulfat- und Aluminium-Ionen werden vorzugsweise durch Mischen der Fe(III)- und/oder Fe(II)-haltigen Sulfat-Lösung und entsprechender Al-haltiger Lösungen bereitgestellt.

Die Umsetzung in Schritt a1) erfolgt vorzugsweise so, dass die alkalische Verbindung als Fällmittel in einem geeigneten Reaktionsbehälter mit Rührer, Begasungsbehälter sowie elektrischer Heizung auf die Reaktionstemperatur erwärmt wird.

Die Reaktionstemperatur liegt vorzugsweise bei 20 bis 100 °C, insbesondere bei 80 bis 100 °C, besonders bevorzugt bei 85 bis 100 °C.

Die wässrige Lösung, enthaltend Eisen-, Sulfat- und Aluminium-Ionen wird zu der vorgelegten alkalischen Verbindung, vorzugsweise in Form ihrer wässrigen Lösung, zudosiert. Die Zugabe erfolgt dabei vorzugsweise bei der Reaktionstemperatur.

Die Fällung erfolgt dabei vorzugsweise bei einem pH-Wert von größer 10, insbesondere bei einem pH von 10,5 bis 14.

Die Zugabe erfolgt vorzugsweise unter Rühren. Sofern ein bestimmtes Verhältnis von Fe(II) und Fe(III) bereits in der wässrigen Lösung, enthaltend die Eisen-, Sulfat- und Aluminium-Ionen, eingestellt wurde, ist es bevorzugt, die Fällungsreaktion unter Inertgas ablaufen zu lassen. Ggf. kann das Fe(II)/(III) Verhältnis aber auch erst während der Fällung durch die oben beschriebene Oxidation eingestellt werden.

Die einzusetzende Menge an alkalischer Verbindung für die Fällung ergibt sich aus den Mengen der Eisen- und Aluminiumionen, wobei ein Mol-Verhältnis von $Fe_{gesamt}$ zu $OH^-$ von 0,45 bis 0,55 sowie von Al(III) zu $OH^-$ von 0,33 bevorzugt ist, sowie ggf. vorhandener freier, zu neutralisierender Säure, beispielsweise Schwefelsäure.

### Fällung a2)

In einer weiteren bevorzugten Ausführungsform der Erfindung sind die Vorgehensweise und die Mengenverhältnisse der Eisen- zu Aluminium-Ionen grundsätzlich dieselben wie bei der Fällung a1), mit dem Unterschied, dass die Aluminium-Verbindung nicht in dem Eisen(II)/(III)-Sulfatgemisch enthalten ist, sondern zusammen mit der alkalischen, als Fällmittel dienenden Verbindung vorgelegt wird.

Bevorzugt ist die Aluminiumverbindung beispielsweise eine wässrige Na-AluminatLösung, die mit dem alkalischen Fällmittel vermischt wird, um dann die löslichen Al-Ionen zu liefern.

Als alkalische Verbindung, die als Fällmittel dient, eignen sich die unter a1) genannten.

Vorzugsweise wird das alkalische Fällmittel mit einer Alkali-Aluminatlösung vermischt vorgelegt und dazu das Eisen(II)/(III)-Sulfatgemisch zudosiert.

### Oxidation b)

Im Anschluss an die Fällung erfolgt die Oxidation mit einem Oxidationsmittel. Vorzugsweise wird als Oxidationsmittel ein sauerstoffhaltigen Gas, wie beispielsweise Luft eingesetzt. Die Oxidation erfolgt dabei vorzugsweise in dem nach Schritt a1) oder a2) erhaltenen wässrigen Medium, insbesondere in der durch die Fällung erhaltenen Suspension. Bevorzugt wird das Oxidationsmittel, insbesondere das sauerstoffhaltige Gas in das nach Schritt a1) oder a2) erhaltene wässrige Medium eingeleitet.

Die Oxidation nach Schritt b) erfolgt dabei insbesondere bei einer Temperatur von 20 bis 100 °C, insbesondere bei 80 bis 100 °C, besonders bevorzugt bei 85 bis 100 °C.

Der Verlauf der Oxidation sowie das Ende des Oxidationsschrittes können beispielsweise durch eine EMK-Messung mit einer handelsüblichen Redoxelektrode im Reaktionsgefäß kontrolliert werden. Die Verarmung der Reaktionsmischung an gelösten Eisen(II)-Ionen wird durch einen Potenzialsprung angezeigt.

Nach erfolgter Oxidation wird die Pigmentvorstufe, vorzugsweise der gebildete Magnetit, abfiltriert und vorzugsweise gewaschen, insbesondere so lange, bis die Filtratleitfähigkeit unterhalb 2000 µS/cm, bevorzugt unterhalb 800 µS/cm, besonders bevorzugt unterhalb 200 µS/cm liegt. Danach schließt sich bevorzugt eine Trocknung des Filterkuchens an, insbesondere bei einer Temperatur von 30 bis 250, bevorzugt von 30 bis 120°C .

**Kalzinierung c)**

Die Herstellung der erfindungsgemäßen Al-haltigen Eisenoxid-Pigmente mit der Zusammensetzung $Fe_{2-x}Al_xO_3$ erfolgt durch Kalzination des nach Schritt b) erhaltenen Oxidationsproduktes, vorzugsweise in Form des isolierten, gewaschenen und getrockneten Filterkuchens, auch als Al-haltiger Magnetit bezeichnet, bei einer Temperatur von 500 bis 1100 °C, vorzugsweise von 600 bis 975 °C, vorzugsweise in Gegenwart eines sauerstoffhaltigen Gases, insbesondere von Luft.

Bei der Kalzination gemäß Schritt c) des erfindungsgemäßen Verfahrens ist zu berücksichtigen, dass die Höhe der optimalen Kalzinierungstemperatur vom Al-Gehalt des nach Schritt b) erhaltenen Oxidationsproduktes abhängt. Die optimale Kalzinierungstemperatur ist dabei die Temperatur, bei der der maximale a*-Wert (Rotanteil) erhalten wurde. Diese kann in einer Reihe verschiedener Glühtemperaturen ermittelt werden.

Zur weiteren Verbesserung der koloristischen Eigenschaften sowie der besseren Verarbeitbarkeit in Bindemitteln und Kunststoffen können die nach Schritt c) erhaltenen erfindungsgemäßen Pigmente noch einer Mahlung und/oder einer Beschichtung unterzogen werden.

Im Falle einer anorganischen Beschichtung ist es bevorzugt, diese an den Schritt c) anzuschließen. Als bevorzugte anorganische Beschichtungsmittel kommen vorzugsweise farblose Oxide oder Hydroxide von Al, Si, Zr und Mg, insbesondere $Al_2O_3$ in Frage.

Ebenfalls bevorzugt ist es, die erfindungsgemäßen Al-haltigen Eisenoxide mit oder ohne anorganische Beschichtung noch einer Mahlung zu unterziehen. Geeignete Mahlmethoden sind beispielsweise Strahlmahlungen, Pendelmahlungen oder auch Nassmahlungen.

Bei der Mahlung können vorzugsweise organische Beschichtungsmittel zugesetzt werden, beispielsweise mehrwertige Alkohole, Polyethylen-, Polypropylenglykole, deren Veretherungsprodukte mit einwertigen Alkoholen und Veresterungsprodukte mit Carbonsäuren sowie Silikonöle. Diese Beschichtungsmittel können zugleich als Mahlhilfsmittel wirken.

Die vorzugsweise zuzudosierenden Mengen an Beschichtungsmitteln können bei anorganischen Beschichtungsstoffen von 0,01 bis 3, bei organischen Beschichtungsstoffen von 0,01 bis 1 Gew.%, bezogen auf das Pigment, liegen. Die Summe von anorganischen und organischen Beschichtungsmitteln ist dabei bei 0,01 bis 3 Gew.%.

**Verwendung**

Die Erfindung betrifft weiterhin die Verwendung der erfindungsgemäßen Pigmente zum Einfärben von Pasten, Lacken, Kunststoffen, Papier und Baumaterialien.

**Messmethoden**

**Prüfung der Farbwerte im Purton**

Die Ermittlung der Farbwerte im Purton erfolgte nach DIN EN ISO 787-25:2007) unter Verwendung der unten beschriebenen Prüfpaste.

Es wurden 5 g eines thixotropierten langöligen Alkydharzes (WorléeKyd P 151), auf den unteren Teil einer Tellerfarbenausreibmaschine (TFAM) mit 240 mm Plattendurchmesser aufgebracht und das jeweilige Eisenoxid-Rotpigment mit der Prüfpaste zu einer farbigen Paste mit 10% PVK (Pigment-Volumen-Konzentration) verarbeitet.

Die Prüfpaste enthält 95Gew% Alkydalharz (Worléekyd P151 der Firma Worlée-Chemie GmbH, DE) und als Thixotropierungsmittel 5 Gew% Luvotix HAT (Lehmann & Voss & Co KG, DE). Dabei wird das Luvotix in das auf 70 bis 75 °C vorgewärmte Alkydalharz eingerührt und bei 95 °C bis zur Auflösung eingearbeitet. Die abgekühlte Paste wird anschließend auf einem Dreiwalzwerk Bläschenfrei gewalzt.

Die Einwaage der Rotpigmente erfolgte gemäß

$$m_P = \frac{PVK * m_b * \rho_p}{(100 - PVK) * \rho_b}$$

$m_P$ = Masse des Eisenoxid-Rotpigments
PVK = Pigment-Volumen-Konzentration
$m_b$ = Masse Bindemittel
$\rho_p$ = Dichte Pigment
$\rho_b$ = Dichte Bindemittel

Die fertige Paste wurde in einen Pastenteller überführt und auf einem Farbmessgerät Datacolor 600 unter der Messgeometrie d / 8° und der Lichtart D65 / 10° mit Glanz farbmetrisch vermessen (CIELAB-Farbraum nach DIN 5033 Teil 7).

**Bestimmung der Hitzestabilität von Eisenoxid-Rotpigmenten in Polyethylen (High Density Polyethylene, HD-PE)**

Die Prüfung der Hitzestabilität in Polyethylen (HD-PE) erfolgte an DIN EN 12 877 - 2 nach Verfahren B im Purton.

HD-PE-Qualität: DOW KT 10000 UE (Granulat)

Verarbeitungsgeräte:

- Einwellen-Extruder Schwabenthan Polytest 30 P

- Spritzgussmaschine Arburg 221 K- 350 - 100

Farbmessgerät und Farbmessung

- Datacolor 600

    Messgeometrie d / 8°

    Lichtart D 65 / 10° mit Glanz

Durchführung

14 g Eisenoxid-Rotpigment wurden mit 1400 g HD-PE-Granulat (1%ige Pigmentierung) in einem Polybeutel in einer PE-Trommel 20 Minuten verkollert. Danach erfolgte die Extrusion im Einwellen-Extruder bei 180°C und 60 UpM. Dieses vordispergierte Granulat (3 mm Korngröße) wurde in der oben benannten SpritzgussMaschine in PE-Plättchen der Abmessung 6*4 cm sowie 3 mm Dicke überführt. Die Starttemperatur betrug 200°C (gleich Bezug für die Hitzestabilität $\Delta C_{ab}$*), und die Temperaturerhöhung erfolgte in 20°C-Schritten bis auf 320°C.

**Beispiele**

Beispiel 1

Durch Auflösen von auf elektrolytischem Weg erhaltenem metallischem Eisen (Handelsprodukt der Fa. Allied Metals Corp.) mit einem Gehalt von je < 1 ppm Mn und Cr in Schwefelsäure (96 Gew.%, reinst, mit Wasser verdünnt; Handelsprodukt der Fa. Bernd Kraft) wurde in bekannter Weise eine Eisen(II)-Sulfatlösung mit einem Gehalt von 92,15 g/l Fe$^{2+}$, 0,08 g/l Fe$^{3+}$, 1,22 Gew.% freier Schwefelsäure und einem pH-Wert von 0,9 hergestellt (Lösung 1).

Durch Auflösen von auf elektrolytischem Weg erhaltenem metallischem Eisen (Handelsprodukt der Fa. Allied Metals Corp.) mit einem Gehalt von je < 1 ppm Mn und Cr in Schwefelsäure reinst (Handelsprodukt der Fa. Bernd Kraft) wurde in gleicher Weise eine zweite Partie Eisen (II)-Sulfatlösung erzeugt. 12 Mol FeSO$_4$ in Form dieser Lösung wurden mit 12 Mol Wasserstoffperoxid in Form von 946 ml einer 35 gew.%igen Lösung (Handelsprodukt der Fa. Merck) und 5 Mol H$_2$SO$_4$ in Form der genannten 96gew.%igen Säure umgesetzt, wobei die Temperatur von ca. 20 auf bis auf ca. 70° anstieg. Es wurde eine vorwiegend Eisen(III) enthaltende Sulfatlösung mit 64,6 g/l Fe$^{3+}$, 11,15 g/l Fe$^{2+}$ sowie 3,02 Gew.% freier Schwefelsäure erhalten (Lösung 2).

Durch Mischen von 12,45 l (15,4 kg) Lösung 1, 3,12 l (3,82 kg) Lösung 2 und 396 ml (523 g) Al$_2$(SO$_4$)$_3$-Lösung

einem Gehalt von 4,3 Gew.% Al (Handelsprodukt der Fa. Feralco) wurde ein Fe(II)/Fe(III)/Al(III)-sulfat-Gemisch mit der molaren Zusammensetzung 20,542 Mol Fe(II), 3,625 Mol Fe(III) und 0,833 Mol Al(III) und einem Gesamtvolumen von 16,0 l erzeugt.

In einem 30-l-Rührbehälter, der mit Begasungseinrichtung, Beheizung, Rührer und Flüssigkeitsdosiereinrichtungen ausgestattet ist, wurden 7,17 l Natronlauge (Gehalt 316 g/l NaOH) vorgelegt sowie unter $N_2$-Begasung (80 l/h) auf 90 °C aufgeheizt. Zu dieser Lauge wurde das genannte Fe(II)/Fe(III)/Al(III)-sulfat-Gemisch innerhalb von 45 min bei 90 °C unter $N_2$-Begasung und Rühren gleichmäßig zudosiert.

Nach Beendigung der Fällungsreaktion erfolgte bei einer Temperatur von 90 °C innerhalb von 9,5 h Reaktionszeit die Oxidation zum Magnetit (Oxidationsprodukt) durch Einleiten von Luft (ca. 40 l/h).

Eine Zusammenstellung der Ansatzmengen für die Herstellung des Oxidationsproduktes ist in Tabelle 2 gegeben.

Die wässrigen Suspensionen der Oxidationsprodukte wurden in bekannter Weise filtriert, auf eine Filtratleitfähigkeit < 200 µS/cm gewaschen und nach Trocknung des Filterkuchens bei einer Temperatur von 40°C wie folgt charakterisiert:

| | | |
|---|---|---|
| spezifische Oberfläche nach der BET-Methode: | 32,6 | m$^2$/g |
| Fe-Gehalt: | 67,9 | Gew.-% |
| Al-Gehalt: | 1,0 | Gew.-% |

Das so isolierte Oxidationsprodukt wurde bei der optimalen Glühtemperatur von 775 °C (Genauigkeit ± 5 °C) und einer Verweilzeit von 30 min in oxidierender Atmosphäre (in Gegenwart von Luft) in einem Kammerofen kalziniert. Zur Ermittlung der optimalen Glühtemperatur wurden verschiedene Temperaturen ausprobiert (siehe Tabelle 3). Das erhaltene erfindungsgemäße Pigment wurde - wie in Tabelle 4 angegeben - charakterisiert und koloristisch in WorléeKyd P 151 (Purton) geprüft (Farbwerte siehe Tabelle 5).

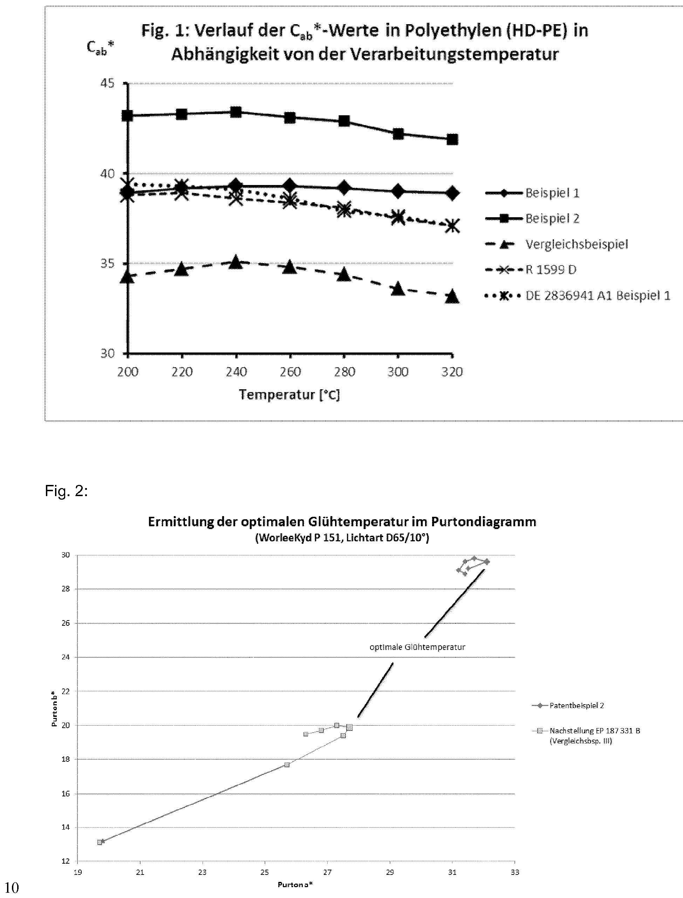

Das gleiche Rotpigment wurde in HD-PE verarbeitet und die Hitzestabilität durch Messung der Farbsättigung $C_{ab}^*$ in Abhängigkeit von der Verarbeitungstemperatur zwischen 200 und 320 °C ermittelt (siehe Tabelle 6 und Fig. 1).

Beispiel 2

In diesem Beispiel wurde entsprechend Beispiel 1 verfahren, wobei das Sulfatgemisch eine molare Zusammensetzung von 19,833 Mol Fe(II), 3,5 Mol Fe(III) sowie 1,667 Mol Al(III) und ein Gesamtvolumen von 15,0 l aufwies. Es wurde durch Mischen von 10,84 l (13,5 kg) einer Eisen(II)-Sulfatlösung mit einem Gehalt von 99,21 g/l Fe$^{2+}$, 0,12 g/l Fe$^{3+}$ und 0,095 Gew.% $H_2SO_4$; 3,03 l (3,705 kg) der in Beispiel 1 genannten Lösung 2; sowie 1,1 l (1,36 kg) einer $Al_2(SO_4)_3$-Lösung mit einem Al-Gehalt von 3,3 Gew. % (Handelsprodukt der Fa. Feralco) gewonnen. Vorgelegt wurden 7,39 l Natronlauge mit einem Gehalt von 316 g/l NaOH.

Die Oxidationszeit betrug ca. 10,5 Stunden bei 85°C.

Eine Zusammenstellung der Ansatzmengen für die Herstellung des Oxidationsproduktes ist in Tabelle 2 gegeben.

Die Charakterisierung dieses Oxidationsproduktes nach Trocknung lieferte folgende Daten:

| | | |
|---|---|---|
| spezifische Oberfläche nach der BET-Methode: | 35,8 | m$^2$/g |
| Fe-Gehalt: | 65,2 | Gew.-% |
| Al-Gehalt: | 3,1 | Gew.-% |

Das Oxidationsprodukt wurde bei der optimalen Glühtemperatur von 900 °C (Genauigkeit ± 5 °C) und 30 min Verweilzeit in oxidierender Atmosphäre in einem Kammerofen kalziniert. Zur Ermittlung der optimalen Glühtemperatur wurden verschiedene Temperaturen ausprobiert (siehe Tabelle 3). Das erhaltene erfindungsgemäße Pigment wurde - wie in Tabelle 4 angegeben - charakterisiert und koloristisch in WorléeKyd P 151, (Purton) geprüft (Farbwerte siehe Tabelle 5).

Das gleiche Rotpigment wurde in HD-PE verarbeitet und, wie in Beispiel 1 beschrieben, die Hitzestabilität durch Messung der Farbsättigung $C_{ab}^*$ ermittelt (siehe Tabelle 6 und Fig. 1).

Vergleichsbeispiel I

In diesem Vergleichsbeispiel wurde ein Oxidationsprodukt ohne Al-Zusatz entsprechend der Verfahrensweise von Beispiel 1 hergestellt. Das Sulfatgemisch hatte dabei eine molare Zusammensetzung von 21,25 Mol Fe(II) sowie 3,75 Mol Fe(III) bei einem Gesamtvolumen von 16,3 l (siehe Tabelle 2). Es wurde durch Mischen von 13,79 l (16,93 kg) einer Eisen(II)-Sulfatlösung mit einem Gehalt von 86,07 g/l Fe$^{2+}$, 0,57 g/l Fe$^{3+}$ und 0,86 Gew.% H$_2$SO$_4$ sowie 2,49 l (3,12 kg) einer Eisen(III)-Sulfatlösung mit einem Gehalt von 84,12 g/l Fe$^{3+}$, 0,19 g/l Fe$^{2+}$ und 3,56 Gew.% freier Schwefelsäure gewonnen. Vorgelegt wurden 7,53 l Natronlauge mit einem Gehalt von 320 g/l NaOH.

Nach einer Oxidationszeit von ca. 7 Stunden bei 85°C sowie Aufarbeitung der wässrigen Suspension wurde ein Oxidationsprodukt mit folgenden Daten erhalten:

| | | |
|---|---|---|
| spezifische Oberfläche nach der BET-Methode: | 19,0 | m$^2$/g |
| Fe-Gehalt: | 70,4 | Gew.-% |
| Al-Gehalt: | 0,01 | Gew.-% |

Die Glühung dieses Oxidationsproduktes erfolgte bei der optimalen Glühtemperatur von 700 °C (Genauigkeit $\pm$ 5 °C) und 30 min Verweilzeit in oxidierender Atmosphäre in einem Kammerofen. Zur Ermittlung der optimalen Glühtemperatur wurden verschiedene Temperaturen ausprobiert (siehe Tabelle 3).

Der erhaltene nicht-erfindungsgemäße Pigment ohne Al-Zusatz wurde - wie in Tabelle 4 angegeben - charakterisiert und koloristisch in WorléeKyd P 151, (Purton) geprüft (Farbwerte siehe Tabelle 5).

Das gleiche Rotpigment wurde in HD-PE verarbeitet und, wie in Beispiel 1 beschrieben, die Hitzestabilität durch Messung der Farbsättigung C$_{ab}$* ermittelt (siehe Tabelle 6 und Abb. 1).

Die erfindungsgemäßen Al-haltigen Pigmente aus Beispiel 1 (0,81 % Al) und Beispiel 2 (2,2 % Al) repräsentieren hochwertige Al-haltige Eisenoxidrotpigmente mit spezifischen Oberflächen nach der BET-Methode im Bereich von 8,6 bis 9,6 m$^2$/g und weisen eine sehr hohe chemische Reinheit auf, die durch Mn- und Cr-Gehalte in Summe unterhalb von 100 ppm, durch Cl-Gehalte unterhalb von 250 ppm sowie durch geringe H$_2$O-Gehalte von kleiner als 0,01 Gew.-% gekennzeichnet sind (siehe Tabelle 5).

Gegenüber den vier Hämatit-Rotpigmenten des Standes der Technik liegen die Farbwerte der erfindungsgemäßen Al-haltigen Pigmente in WorléeKyd P 151 (Purton) deutlich höher (siehe Tabelle 5) und erschließen somit für Eisenoxidrotpigmente neue Bereiche im CIELAB-Farbraum, und zwar mit:

$\Delta$a* = 0.7 CIELAB-Einheiten
$\Delta$b* = 5,2 CIELAB-Einheiten
$\Delta$C* = 4,0 CIELAB-Einheiten

Gleichzeitig sind die erfindungsgemäßen Al-haltigen Rotpigmente im Vergleich zum Stand der Technik durch eine deutlich höhere Hitzestabilität in HD-PE (als $\Delta$C$_{ab}$*-Werte von 200 gegen 320 °C, siehe Tabelle 6) bei deutlich höherer Farbsättigung C$_{ab}$* gekennzeichnet, und zwar:

$\Delta$C$_{ab}$* (erfindungsgemäß) bis -1,3 CIELAB-Einheiten gegenüber $\Delta$C$_{ab}$* (Stand der Technik) von -1,7 bis -2,3 CIELAB-Einheiten

C$_{ab}$* (erfindungsgemäß) bis zu 43,4 CIELAB-Einheiten gegenüber C$_{ab}$* (Stand der Technik) bis zu 39,4 CIELAB-Einheiten

**Vergleichsbeispiel II:**

Das in EP-A-1380542 beschriebene Al-dotierte Pigment mit dem Fe:Al-Verhältnis von 95:5 wurde entsprechend den Angaben des dortigen Beispiels nachgestellt. Zwar finden sich in Fig. 4B der EP'542 die a*- und b*-Werte für verschiedene Temperaturen dieses Beispiels, nicht jedoch die genaue Methode, nach der diese Farbdaten bestimmt wurden. Das nach dem Beispiel der EP'542 hergestellte Pigment wurde analog zu der Farbdaten-Bestimmung der obigen erfindungsgemäßen Beispiele vermessen.

Zur Ermittlung der optimalen Glühtemperatur wurden verschiedene Temperaturen ausprobiert (siehe Tabelle 3). Dabei wurde als weitere Temperatur gegenüber denen der Fig. 4B aus EP'542 auch noch 700 °C getestet, die sich dabei als optimale Glühtemperatur herausstellte.

Das erhaltene nicht-erfindungsgemäße Pigment wurde - wie in Tabelle 4 angegeben - charakterisiert und koloristisch in WorléeKyd P 151, (Purton) geprüft (Farbwerte siehe Tabelle 5).

Dabei finden sich die a*-und b*-Werte für das nach EP'542 hergestellte Fe:Al. = 95:5 System auch in dem Testsystem der vorliegenden Erfindung deutlich außerhalb der jeweils erfindungsgemäßen Bereiche.

**Vergleichsbeispiel III:**

Das Beispiel 1 wurde wiederholt, jedoch wurde wie zur Herstellung von Al-dotiertem Eisenoxid in Bsp. 7 der EP-A-187331 MgO anstelle von NaOH als Fällmittel eingesetzt, entsprechend der Zweiwertigkeit von Mg in halber molarer Menge. Außerdem wurde das Fe(II)/Fe(III)/Al(III)-sulfat-Gemisch anstelle der NaOH vorgelegt und das MgO-Fällmittel ebenfalls wie in EP'331 beschrieben dazu gegeben. Insofern wurden die Unterschiede eines anderen Fällmittels und einer anderen Zugabe-Reihenfolge aus der EP'331 auf das Bsp. 1 der Erfindung übertragen.

Das hergestellte Pigment wurde analog zu der Farbdaten-Bestimmung der obigen erfindungsgemäßen Beispiele vermessen.

Zur Ermittlung der optimalen Glühtemperatur wurden verschiedene Temperaturen ausprobiert (siehe Tabelle 3). Eine Gegenüberstellung mit dem Beispiel 2 findet sich in Fig. 2.

Das erhaltene nicht-erfindungsgemäße Pigment wurde - wie in Tabelle 4 angegeben - charakterisiert und koloristisch in WorléeKyd P 151, (Purton) geprüft (Farbwerte siehe Tabelle 5).

Dabei finden sich die a* -und b* -Werte für das analog nach EP'331 hergestellte Bsp. 7 in dem vorliegenden Testsystem der vorliegenden Erfindung die deutlich außerhalb der jeweils erfindungsgemäßen Bereiche liegen.

**Tabelle 2: Ansatzmengen zur Herstellung der Oxidationsprodukte (Schritt b)**

| Beispiele Oxidationsprodukte | Ansatzmengen in Mol | | | | | FeSO$_4$/NaOH-Verhältnis |
|---|---|---|---|---|---|---|
| | Me$_{ges}$ | Fe$_{ges}$ | F$_e$(II) | F$_e$(III) | Al(III) | |
| Beispiel 1 | 25 | 24,167 | 20,542 | 3,625 | 0,833 | 0,541 |
| Beispiel 2 | 25 | 23,333 | 19,833 | 3,5 | 1,667 | 0,484 |
| Vergleichsbeispiel I | 25 | 25 | 21,25 | 3,75 | 0 | 0,484 |

**Tabelle 3: Ermittlung der optimalen Glühtemperaturen** (Farbwerte in WorléeKyd P 151, Purton, Lichtart D65/10°)

| Pigment | Glühtemperatur [°C] | Spez. Oberfläche (BET) [m$_2$/g] | Farbwerte, Purton | |
|---|---|---|---|---|
| | | | a* | b* |
| Beispiel 1 | 700 | 13,9 | 26,1 | 23,9 |
| | 750 | 11,8 | 27,5 | 24,0 |
| | **775** | **8,6** | **31,9** | **25,9** |
| | 800 | 7,5 | 31,8 | 25,1 |
| | 825 | 5,7 | 30,7 | 22,4 |
| | 850 | 4,7 | 30,2 | 21,2 |
| | 900 | 3,0 | 25,2 | 14,0 |
| Beispiel 2 | 700 | 14,2 | 31,4 | 28,9 |
| | 750 | 13,4 | 31,2 | 29,1 |
| | 800 | 11,8 | 31,4 | 29,6 |
| | 850 | 11,6 | 31,7 | 29,8 |
| | **900** | **9,6** | **32,1** | **29,6** |
| | 950 | 8,5 | 31,5 | 29,2 |
| Vergleichsbeispiel I | 600 | 7,9 | 29,1 | 21,0 |
| | 650 | 7,1 | 29,8 | 21,1 |
| | **700** | **6,2** | **30,1** | **20,7** |
| | 750 | 5,7 | 30,0 | 20,0 |
| | 800 | 4,9 | 29,4 | 18,8 |

(fortgesetzt)

| Pigment | Glühtemperatur | Spez. Oberfläche | Farbwerte, Purton | |
|---|---|---|---|---|
| | [°C] | (BET) [m$_2$/g] | a* | b* |
| Vergleichsbeispiel II | 300 | 26,7 | 24,3 | 19,8 |
| | 500 | 20,4 | 25,8 | 20,5 |
| | 650 | 17,1 | 27,8 | 22,6 |
| | **700** | **14,9** | **28,1** | **22,9** |
| | 800 | 10,3 | 27,7 | 23,2 |
| | 1000 | 3,1 | 23,8 | 14,8 |
| Vergleichsbeispiel III | 650 | 21,1 | 26,3 | 19,5 |
| | 700 | 12,9 | 26,8 | 19,7 |
| | 750 | 11,3 | 27,3 | 20,0 |
| | **800** | **8,0** | **27,7** | **19,9** |
| | 850 | 5,9 | 27,5 | 19,4 |
| | 900 | 4,3 | 25,7 | 17,7 |
| | 950 | 2,4 | 19,7 | 13,1 |

Die optimale Glühtemperatur ist durch fette Schrift hervorgehoben.

**Tabelle 4: Charakterisierung der erfindungsgemäßen Pigmente nach Kalzinierung der Oxidationsprodukte**

| Pigment | optimale Glühtemperatur zum Rotpigment [°C] | spezifische Oberfläche (BET) [m²/g] | Analysenwerte | | | | | |
|---|---|---|---|---|---|---|---|---|
| | | | Fe gesamt [Gew. %] | Al | | Mn [ppm] | Cr [ppm] | Cl [ppm] |
| | | | | [Gew. %] | x-Wert* | | | |
| Beispiel 1 | 775 | 8,6 | 69 | 0,81 | 0,047 | <1 | 22 | 3 |
| Beispiel 2 | 900 | 9,6 | 66 | 2,2 | 0,129 | 2,1 | 13 | 8 |
| Vergleichsbeispiel I | 700 | 6,2 | 70,4 | <0,01 | <0,001 | n.b.** | n.b.** | n.b.** |
| Vergleichsbeispiel II | 700 | 14,9 | n.b.** | 1,7*** | 0,1*** | n.b.** | n.b.** | n.b.** |
| Vergleichsbeispiel III | 800 | 8,0 | 58,9 | 1,3 | 0,08 | 29** | n.b.** | n.b.** |

\* bezüglich $Fe_{2-x}Al_xO_3$,

\*\*nicht bestimmt

\*\*\* gemäß Angaben aus EP'542

**Tabelle 5: Farbwerte in WorléeKyd P 151 (Purton, Lichtart D65/10°)**

| Pigmente gemäß Erfindung | a* | b* | $C_{ab}^*$ | Al-Gehalte | |
|---|---|---|---|---|---|
| | | | | [Gew. %] | x-Wert |
| Beispiel 1 | 31,9 | 25,9 | 41,1 | 0,81 | 0,047 |
| Beispiel 2 | 32,1 | 29,9 | 43,9 | 2,2 | 0,129 |
| Vergleichsbeispiel I | 30,0 | 20,7 | 36,5 | < 0,01 | <0,001 |
| Vergleichsbeispiel II | 28,1 | 22,9 | 36,3 | 1,7*** | 0,1*** |
| Vergleichsbeispiel III | 27,7 | 19,9 | 34,1 | 1,3 | 0,8 |
| **Rotpigmente gemäß Stand der Technik** | a* | b* | $C_{ab}^*$ | Al-Gehalte | |
| | | | | [Gew. %] | x-Wert |
| R1599 D | 31,4 | 24,5 | 39,9 | - | |
| Beispiel 1 WO 2016/038152 | 31,1 | 24,7 | 39,6 | - | |
| Beispiel 3 DE 102004/024013A1 | 31,3 | 23 | 38,8 | 1,0 | 0,059 |
| Beispiel 1 DE2836941A1 | 30,2 | 23 | 38 | 0,95 | 0,056 |
| *** gemäß Angaben aus EP'542 | | | | | |

**Tabelle 6: Daten für Fig. 1**

| Verarbeitungstemperatur [°C] | Beispiel 1 $C_{ab}^*$ | Beispiel 2 $C_{ab}^*$ | Vergleichsbeispiel $C_{ab}^*$ | R 1599D (Huntsman) $C_{ab}^*$ | Beispiel 1 DE2836941 A1 $C_{ab}^*$ |
|---|---|---|---|---|---|
| 200 | 38,9 | 43,2 | 34,3 | 38,8 | 39,4 |
| 220 | 39,2 | 43,3 | 34,7 | 38,9 | 39,3 |
| 240 | 39,3 | 43,4 | 35,1 | 38,6 | 39,1 |
| 260 | 39,3 | 43,1 | 34,8 | 38,4 | 38,6 |
| 280 | 39,2 | 42,9 | 34,4 | 38,1 | 37,9 |
| 300 | 39 | 42,2 | 33,6 | 37,5 | 37,6 |
| 320 | 38,9 | 41,9 | 33,2 | 37,1 | 37,1 |
| $\Delta C_{ab}^*$ (für $\Delta$T 200 zu 320 °C) | ± 0 | -1,3 | -1,1 | -1,7 | -2,3 |

**Patentansprüche**

1. Aluminium-haltige Eisenoxidpigmente der Formel $Fe_{2-x}Al_xO_3$ mit x-Werten von 0,01 bis 0,25, **dadurch gekennzeichnet, dass** sie einen a*-Wert von 30,5 bis 32,5 CIELAB-Einheiten, einen b*-Wert von 25,5 bis 30,5 CIELAB-Einheiten jeweils als Purton gemessen im Alkydharz nach DIN EN ISO 787-25 : 2007, besitzen.

2. Pigmente nach Anspruch 1, **dadurch gekennzeichnet, dass** sie eine Farbsättigung $C_{ab}^*$ von 39,8 bis 44,6 CIELAB-Einheiten jeweils als Purton, vorzugsweise mit Lichtart D65/10°, gemessen im Alkydharz nach DIN EN ISO 787-25 : 2007, besitzen.

3. Pigmente nach wenigstens einem der Ansprüche 1 bis 2, **dadurch gekennzeichnet, dass** sie eine spezifische Oberfläche, nach der BET-Methode, zwischen 6,5 und 12,5 m$^2$/g aufweisen.

4. Pigmente nach wenigstens einem der Ansprüche 1 bis 3, **dadurch gekennzeichnet, dass** das Aluminium-haltige Eisenoxidpigment in einer Hämatitstruktur vorliegt.

5. Pigmente nach wenigstens einem der Ansprüche 1 bis 4, **dadurch gekennzeichnet, dass** in Summe der Gehalt an Mangan und Chrom kleiner als 500 ppm, besonders bevorzugt kleiner als 100 ppm, bezogen auf das Pigment beträgt.

6. Pigmente nach wenigstens einem der Ansprüche 1 bis 5, **dadurch gekennzeichnet, dass** die Menge an Magnesium kleiner als 500 ppm, besonders bevorzugt kleiner als 100 ppm, bezogen auf das Pigment beträgt.

7. Pigmente nach wenigstens einem der Ansprüche 1 bis 6, **dadurch gekennzeichnet, dass** die Pigmente einen Gehalt an Wasser von weniger als 0,8 Gew.%, bevorzugt von weniger als 0,5 Gew.% besitzen.

8. Pigmente nach wenigstens einem der Ansprüche 1 bis 7, **dadurch gekennzeichnet, dass** die Pigmente eine organische und/oder anorganische Beschichtung, insbesondere in einer Menge von 0,01 bis 3 Gew.-%, bezogen auf das Pigment, aufweisen.

9. Pigmente nach wenigstens einem der Ansprüche 1 bis 8, **dadurch gekennzeichnet, dass** sie eine Hitzestabilität gemessen in HDPE Polyethylen mit bei einer 1 %igen Pigmentierung, bestimmt gemäß DIN EN 12877 - 2 durch eine Veränderung ($\Delta C_{ab}$*) der Farbsättigung ($C_{ab}$*) von weniger als 3 CIELAB-Einheiten, vorzugsweise weniger als 1,5 CIELAB-Einheiten bei Temperaturerhöhung von 200 auf 320°C aufweisen.

10. Pigmente gemäß wenigstens einem der Ansprüche 1 bis 9, **dadurch gekennzeichnet, dass** in der Formel der Al-Index x von 0,01 bis 0,10, insbesondere von 0,025 bis 0,075 beträgt.

11. Pigmente gemäß wenigstens einem der Ansprüche 1 bis 9, **dadurch gekennzeichnet, dass** in der Formel der Al-Index x von 0,11 bis 0,25, insbesondere von 0,12 bis 0,15 beträgt.

12. Verfahren zur Herstellung der Aluminium-haltigen Hämatit-Pigmente nach wenigstens einem der Ansprüche 1 bis 11, enthaltend wenigstens die Schritte a) Fällung, b) Oxidation und c) Kalzination, **dadurch gekennzeichnet, dass** man:

    a1) eine wässrige Lösung enthaltend Eisen-, Sulfat- und Aluminium-Ionen, wobei das molare Verhältnis von Eisen- zu Al-Ionen 199 : 1 bis 7 : 1 beträgt, mit einem Alkalimetallhydroxid, insbesondere NaOH als alkalischer Verbindung umsetzt, wobei die wässrige Lösung, enthaltend Eisen-, Sulfat- und Aluminium-Ionen zu der vorgelegten alkalischen Verbindung, vorzugsweise in Form ihrer wässrigen Lösung, zudosiert wird oder
    a2) eine wässrige Lösung enthaltend Eisen- und Sulfat-Ionen mit einem Alkalimetallhydroxid, insbesondere NaOH als alkalischer Verbindung, und wenigstens einer Aluminiumverbindung, vorzugsweise Alkali-Aluminat, insbesondere Natrium-aluminat umsetzt, wobei das molare Verhältnis von Eisen der Lösung zu Aluminium der Aluminiumverbindung 199 : 1 bis 7 : 1 beträgt und wobei die alkalische Verbindung mit wenigstens einer Aluminiumverbindung, vorzugsweise einer Alkali-Aluminatlösung vorgelegt wird und die wässrige Lösung enthaltend Eisen- und Sulfat-Ionen zudosiert wird,
    b) die nach Schritt a1) oder a2) erhaltene wässrige Suspension in Gegenwart eines Oxidationsmittels oxidiert und
    c) das nach b) erhaltenen Oxidationsprodukt bei einer Temperatur von 500 bis 1100 °C in oxidierender Atmosphäre kalziniert.

13. Verfahren nach Anspruch 12, **dadurch gekennzeichnet, dass** die wässrige Lösung, enthaltend Eisen-, Sulfat- und Aluminium-Ionen im Schritt a1), einen Anteil von Fe(III) von 5 bis 30 Mol%, insbesondere 10 bis 20 Mol% Fe(III), bezogen auf die Gesamteisenmenge in der Lösung aufweist.

14. Verwendung der Pigmente nach wenigstens einem der Ansprüche 1 bis 11 zur Einfärbung von Pasten, Lacken, Kunststoffen, Papier und Baumaterialien.

**Claims**

1. Aluminium-containing iron oxide pigments of the formula $Fe_{2-x}Al_xO_3$ with x values from 0.01 to 0.25, **characterized in that** they possess an a* value of 30.5 to 32.5 CIELAB units and a b* value of 25.5 to 30.5 CIELAB units, measured in each case as full shade in the alkyd resin according to DIN EN ISO 787-25 : 2007.

2. Pigments according to Claim 1, **characterized in that** they possess a saturation Cab* of 39.8 to 44.6 CIELAB units, in each case as full shade, preferably with illuminant D65/10°, measured in the alkyd resin according to DIN EN ISO 787-25 : 2007.

3. Pigments according to at least one of Claims 1 to 2, **characterized in that** they have a specific surface area, by the BET method, of between 6.5 and 12.5 $m^2/g$.

4. Pigments according to at least one of Claims 1 to 3, **characterized in that** the aluminium-containing iron oxide pigment is present in a haematite structure.

5. Pigments according to at least one of Claims 1 to 4, **characterized in that** the sum content of manganese and chromium is less than 500 ppm, more preferably less than 100 ppm, based on the pigment.

6. Pigments according to at least one of Claims 1 to 5, **characterized in that** the amount of magnesium is less than 500 ppm, more preferably less than 100 ppm, based on the pigment.

7. Pigments according to at least one of Claims 1 to 6, **characterized in that** the pigments possess a water content of less than 0.8 wt%, preferably of less than 0.5 wt%.

8. Pigments according to at least one of Claims 1 to 7, **characterized in that** the pigments have an organic and/or inorganic coating, more particularly in an amount of 0.01 to 3 wt%, based on the pigment.

9. Pigments according to at least one of Claims 1 to 8, **characterized in that** they have a heat stability measured in HDPE polyethylene at 1% pigmentation, determined according to DIN EN 12877-2 by a change ($\Delta C_{ab}$*) in the saturation ($C_{ab}$*) of less than 3 CIELAB units, preferably less than 1.5 CIELAB units, on temperature increase from 200 to 320°C.

10. Pigments according to at least one of Claims 1 to 9, **characterized in that** in the formula the Al index x is from 0.01 to 0.10, more particularly from 0.025 to 0.075.

11. Pigments according to at least one of Claims 1 to 9, **characterized in that** in the formula the Al index x is from 0.11 to 0.25, more particularly from 0.12 to 0.15.

12. Process for producing the aluminium-containing haematite pigments according to at least one of Claims 1 to 11, comprising at least the steps of

a) precipitation, b) oxidation and c) calcination, **characterized in that**:

a1) an aqueous solution comprising ions of iron, of sulfate and of aluminium, the molar ratio of iron ions to Al ions being 199:1 to 7:1, is reacted with an alkali metal hydroxide, more particularly NaOH, as alkaline compound, with the aqueous solution comprising ions of iron, of sulfate and of aluminium being metered into the initial charge of the alkaline compound, preferably in the form of its aqueous solution, or
a2) an aqueous solution comprising ions of iron and of sulfate is reacted with an alkali metal hydroxide, more particularly NaOH, as alkaline compound, and with at least one aluminium compound, preferably alkali metal aluminate, more particularly sodium aluminate, with the molar ratio of iron in the solution to aluminium in the aluminium compound being 199:1 to 7:1 and with the alkaline compound being introduced as an initial charge with at least one aluminium compound, preferably an alkali metal aluminate solution, and the aqueous solution comprising ions of iron and of sulfate being metered in,

b) the aqueous suspension obtained after step a1) or a2) is oxidized in the presence of an oxidizing agent, and
c) the oxidation product obtained after b) is calcined at a temperature of 500 to 1100°C in an oxidizing atmosphere.

**13.** Process according to Claim 12, **characterized in that** the aqueous solution comprising ions of iron, of sulfate and of aluminium in step a1) has an Fe(III) fraction of 5 to 30 mol%, more particularly 10 to 20 mol% Fe(III), based on the total amount of iron in the solution.

**14.** Use of the pigments according to at least one of Claims 1 to 11 for the colouring of pastes, paints, plastics, paper and building materials.

**Revendications**

**1.** Pigments d'oxyde de fer contenant de l'aluminium de formule $Fe_{2-x}Al_xO_3$ avec des valeurs de x de 0,01 à 0,25, **caractérisés en ce qu'**ils possèdent une valeur a* de 30,5 à 32,5 unités CIELAB, une valeur b* de 25,5 à 30,5 unités CIELAB à chaque fois en tant que couleur en masse mesurée dans une résine d'alkyde selon la norme DIN EN ISO 787-25 : 2007.

**2.** Pigments selon la revendication 1, **caractérisés en ce qu'**ils possèdent une saturation de couleur $C_{ab}$* de 39,8 à 44,6 unités CIELAB à chaque fois en tant que couleur en masse, de préférence avec un type de lumière D65/10°, mesurée dans une résine d'alkyde selon la norme DIN EN ISO 787-25 : 2007.

**3.** Pigments selon au moins l'une des revendications 1 et 2, **caractérisés en ce qu'**ils présentent une surface spécifique, d'après le procédé BET, comprise entre 6,5 et 12,5 $m^2/g$.

**4.** Pigments selon au moins l'une des revendications 1 à 3, **caractérisés en ce que** le pigment d'oxyde de fer contenant de l'aluminium est présent en une structure d'hématite.

**5.** Pigments selon au moins l'une des revendications 1 à 4, **caractérisés en ce que** la teneur en manganèse et en chrome est au total inférieure à 500 ppm, particulièrement préférablement inférieure à 100 ppm, par rapport au pigment.

**6.** Pigments selon au moins l'une des revendications 1 à 5, **caractérisés en ce que** la quantité de magnésium est inférieure à 500 ppm, particulièrement préférablement inférieure à 100 ppm, par rapport au pigment.

**7.** Pigments selon au moins l'une des revendications 1 à 6, **caractérisés en ce que** les pigments possèdent une teneur en eau inférieure à 0,8 % en poids, préférablement inférieure à 0,5 % en poids.

**8.** Pigments selon au moins l'une des revendications 1 à 7, **caractérisés en ce que** les pigments présentent un revêtement organique et/ou inorganique, en particulier en une quantité de 0,01 à 3 % en poids, par rapport au pigment.

**9.** Pigments selon au moins l'une des revendications 1 à 8, **caractérisés en ce qu'**ils présentent une stabilité à la chaleur mesurée dans du polyéthylène HDPE à une pigmentation de 1 %, déterminée selon la norme DIN EN 12877-2 par une modification ($\Delta C_{ab}$*) de la saturation de couleur ($C_{ab}$*), inférieure à 3 unités CIELAB, de préférence inférieure à 1,5 unités CIELAB, lors d'une augmentation de température de 200 à 320 °C.

**10.** Pigments selon au moins l'une des revendications 1 à 9, **caractérisés en ce que** dans la formule, l'indice x d'Al est de 0,01 à 0,10, en particulier de 0,025 à 0,075.

**11.** Pigments selon au moins l'une des revendications 1 à 9, **caractérisés en ce que** dans la formule, l'indice x d'Al est de 0,11 à 0,25, en particulier de 0,12 à 0,15.

**12.** Procédé pour la préparation des pigments d'hématite contenant de l'aluminium selon au moins l'une des revendications 1 à 11, contenant au moins les étapes de a) précipitation, b) oxydation et c) calcination, **caractérisé en ce que** :

a1) on transforme une solution aqueuse contenant des ions fer, des ions sulfate et des ions aluminium, le rapport molaire d'ions fer sur ions Al étant de 199 : 1 à 7 : 1, avec un hydroxyde de métal alcalin, en particulier NaOH en tant que composé alcalin, la solution aqueuse, contenant des ions fer, des ions sulfate et des ions aluminium étant ajoutée au composé alcalin fourni, de préférence sous forme de sa solution aqueuse, ou
a2) on transforme une solution aqueuse contenant des ions fer et des ions sulfate avec un hydroxyde de métal alcalin, en particulier NaOH en tant que composé alcalin, et au moins un composé de l'aluminium, de préférence un aluminate d'alcali, en particulier un aluminate de sodium, le rapport molaire du fer de la solution sur l'aluminium du composé de l'aluminium étant de 199 : 1 à 7 : 1 et le composé alcalin étant fourni avec au moins un composé de l'aluminium, de préférence une solution d'aluminate d'alcali et la solution aqueuse contenant des ions fer et des ions sulfate étant ajoutée,

b) on oxyde la suspension aqueuse obtenue après l'étape a1) ou a2) en présence d'un agent d'oxydation et

c) on calcine le produit d'oxydation obtenu après b) à une température de 500 à 1 100 °C dans une atmosphère oxydante.

**13.** Procédé selon la revendication 12, **caractérisé en ce que** la solution aqueuse, contenant des ions fer, des ions sulfate et des ions aluminium dans l'étape a1), présente une proportion de Fe(III) de 5 à 30 % en moles, en particulier 10 à 20 % en moles de Fe(III), par rapport à la quantité totale de fer dans la solution.

**14.** Utilisation des pigments selon au moins l'une des revendications 1 à 11 pour la coloration de pâtes, de peintures, de plastiques, de papier et de matériaux de construction.

**Fig. 1: Verlauf der $C_{ab}$*-Werte in Polyethylen (HD-PE) in Abhängigkeit von der Verarbeitungstemperatur**

Fig. 2:

Ermittlung der optimalen Glühtemperatur im Purtondiagramm
(WorleeKyd P 151, Lichtart D65/10°)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016038152 A
- DE 102004024013 A1
- DE 2826941 A1
- EP 1380542 A
- EP 187331 A

- DE 3500470
- EP 1380542 A1
- DE 2826941
- DE 2836941 A1